# EUROPEAN PATENT SPECIFICATION

(11) **EP 4 135 153 B1**
(45) Date of publication and mention of the grant of the patent: **27.03.2024**
(21) Application number: 22175813.9
(22) Date of filing: 27.05.2022
(51) Int. Cl.: H02J 7/00, H02J 7/02, H01M 10/42

(54) **BATTERY CELL BALANCE CIRCUIT AND METHOD OF OPERATING THE SAME**
BATTERIEZELLENAUSGLEICHSSCHALTUNG UND BETRIEBSVERFAHREN DAFÜR
CIRCUIT D'ÉQUILIBRAGE DE CELLULE DE BATTERIE ET SON PROCÉDÉ DE FONCTIONNEMENT

(30) Priority: 13.08.2021 US 202163232925 P; 22.12.2021 CN 202111579357
(43) Date of publication of application: 15.02.2023
(73) Proprietor: Delta Electronics, Inc., Taoyuan City 320023 (TW)
(72) Inventor: LI, Sheng-Hua, 320023 Taoyuan City (TW); WANG, Hung-Chang, 320023 Taoyuan City (TW); AI, Tsu-Hua, 320023 Taoyuan City (TW)
(74) Representative: 2K Patentanwälte Blasberg Kewitz & Reichel

(56) References cited:
- EP-A2- 2 565 959
- CN-A- 105 375 539
- CN-A- 110 752 635
- CN-A- 113 078 714

## Description

### BACKGROUND

### Technical Field

The present disclosure relates to a battery cell balance circuit comprising a plurality of battery cells, and a plurality of switches, each of the switches correspondingly connected to each of the battery cells, an AC/DC converter, configured to receive an AC power and convert the AC power into a DC power, as known from CN 113 078 714 A. The present disclosure further relates to a method of operating the same, and more particularly to an active battery cell balance circuit and a method of operating the same. Further such circuits and methods are known from CN 110 752 635 A.

### Description of Related Art

The statements in this section merely provide background information related to the present disclosure and do not necessarily constitute prior art.

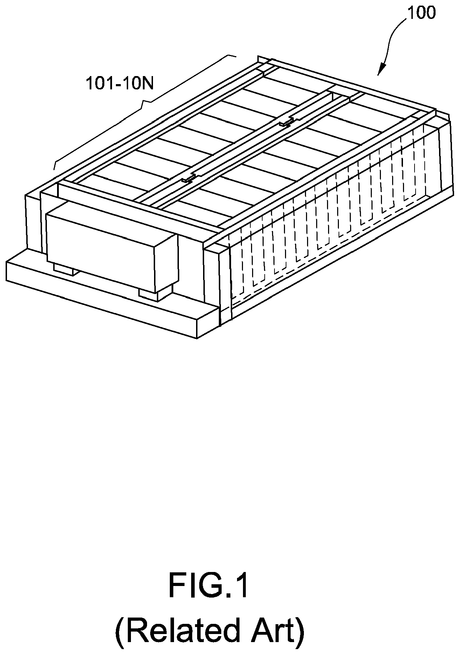

In the application of high-energy (high-power), high-voltage energy storage system, it is usually not operated by a single battery. In other words, in order to achieve high-energy (high-power) and high-voltage energy storage applications, the packaging of multiple battery cells will be modularized. FIG. 1 shows a perspective diagram of a battery module having a plurality of battery cells in the related art. Each battery module 100 has 18 battery cells 101-10N arranged in two rows and connected in series. Therefore, in the application of the energy storage system, parallel connection can be provided through multiple groups of battery modules 100 at the same time so as to achieve high-energy (high-power) and high-voltage power supply applications.

For a single battery cell 101-10N, when the battery cell 101-10N ages, abnormal phenomena such as easy to be fully charged and easy to discharge will occur. For the single battery module 100 shown in FIG. 1, it has 18 battery cells 101-10N. Once one of the battery cells ages in advance, the effect of charging and discharging of the more seriously aged battery cell on the other 17 battery cells will lie in: during charging, the charging voltage of the more seriously aged battery cell rapidly rises. Therefore, for the overall battery module 100, during the normal charging process, the more seriously aged battery cell may be over-charged (other battery cells may not be fully charged), or even damaged. Conversely, during discharging, the voltage of the more seriously aged battery cells rapidly drops. Therefore, for the overall battery module 100, during the normal discharging process, the more seriously aged battery cell may be over-discharged (other battery cells may not be fully discharged), or even damaged.

### SUMMARY

An object of the present disclosure is to provide a battery cell balance circuit to solve the problems of existing technology.

In order to achieve the above-mentioned object, the battery cell balance circuit comprises an isolated DC/DC converter, an input side of the isolated DC/DC converter coupled in parallel to an input side of each of the switches, and an output side of the isolated DC/DC converter coupled to the a battery link, wherein the plurality of battery cells are connected in series to form a battery link, a circuit switch, coupled between the AC/DC converter, the isolated DC/DC converter, and the plurality of switches, and a control unit, configured to provide a plurality of control signals to correspondingly control the plurality of switches and the circuit switch.

Another object of the present disclosure is to provide a method of operating a battery cell balance circuit to solve the problems of existing technology.

In order to achieve the above-mentioned object, the battery cell balance circuit includes a plurality of battery cells connected in series to form a battery link, a plurality of switches, each of the switches correspondingly connected to each of the battery cells, and a circuit switch coupled between a DC power and the switches. The method includes steps of: controlling the switch corresponding to the battery cell to be turned on when a battery voltage of any one of the battery cells is detected to be greater than an upper threshold voltage, releasing electrical energy of the battery cell to the battery link, controlling the circuit switch to be turned on and controlling the switch corresponding to the battery cell to be turned on when the battery voltage of any one of the battery cells is detected to be less than a lower threshold voltage, and receiving, by the battery cell, the electrical energy from the DC power.

Advantageous embodiments are the subject of the dependent claims.

Accordingly, the battery voltage is adjusted through the release and supplement of electrical energy for the more seriously aged battery cells, that is, when the battery voltage of the battery cell is too high, the electrical energy is transmitted to the battery link, and when the battery voltage of the battery cell is too low, the electrical energy is supplemented by the AC power. Therefore, the battery voltage of the more severely aged battery cells during the charging and discharging processes can be maintained to be approximately the same as the battery voltage of other battery cells so as to ensure the normal operation of the overall battery module. Accordingly, in the application of the energy storage system, the operation of the battery module can be continuously maintained without requiring frequent replacement of battery cells. Until the annual repair, the seriously aged battery cells will be replaced in order to improve the economic benefits of the application of the energy storage system.

It is to be understood that both the foregoing general description and the following detailed description are exemplary, and are intended to provide further explanation of the present disclosure as claimed. Other advantages and features of the present disclosure will be apparent from the following description, drawings, and claims.

### BRIEF DESCRIPTION OF DRAWINGS

The present disclosure can be more fully understood by reading the following detailed description of the embodiment, with reference made to the accompanying drawing as follows:
FIG. 1 is a perspective diagram of a battery module having a plurality of battery cells in the related art.
FIG. 2 is a block circuit diagram of a switch unit of a battery cell balance circuit according to a first embodiment of the present disclosure.
FIG. 3 is a block circuit diagram of the switch unit of the battery cell balance circuit according to a second embodiment of the present disclosure.
FIG. 4 is a block circuit diagram of the switch unit of the battery cell balance circuit according to a third embodiment of the present disclosure.
FIG. 5 is a block circuit diagram of the battery cell balance circuit according to a preferred embodiment of the present disclosure.
FIG. 6 is a detailed block circuit diagram of the battery cell balance circuit according to the preferred embodiment of the present disclosure.
FIG. 7 is a flowchart of a method of operating the battery cell balance circuit according to the present disclosure.

### DETAILED DESCRIPTION

Reference will now be made to the drawing figures to describe the present disclosure in detail. It will be understood that the drawing figures and exemplified embodiments of present disclosure are not limited to the details thereof.

Before describing the technical features of the battery cell balance circuit and the method of operating the same in detail, the passive battery cell balance technology and the active battery cell balance technology are briefly described. The passive battery cell balance technology refers to the energy consumption of battery cells with higher voltage through energy-consuming components. The common practice is: each battery cell is connected in parallel with resistance components through the switch circuit, and the energy of the battery cells with higher voltage is consumed by controlling the conduction (turned-on) of the switch and the parallel resistance components, thereby reducing the battery voltage of the battery cells to achieve a voltage balance between the battery cells.

In comparison with the passive battery cell balance technology, the active battery cell balance technology refers to the redistribution of energy between cells. For example, using energy storage components (such as inductors or capacitors) to temporarily store the energy of the battery cells with higher voltage, and then release the temporarily stored energy to the battery cells with lower voltage to achieve the effect of voltage balance between the battery cells.

However, in comparison with the existing active battery cell balance technology disclosed above, the present disclosure proposes different technical means to achieve the effect of active battery cell balance.

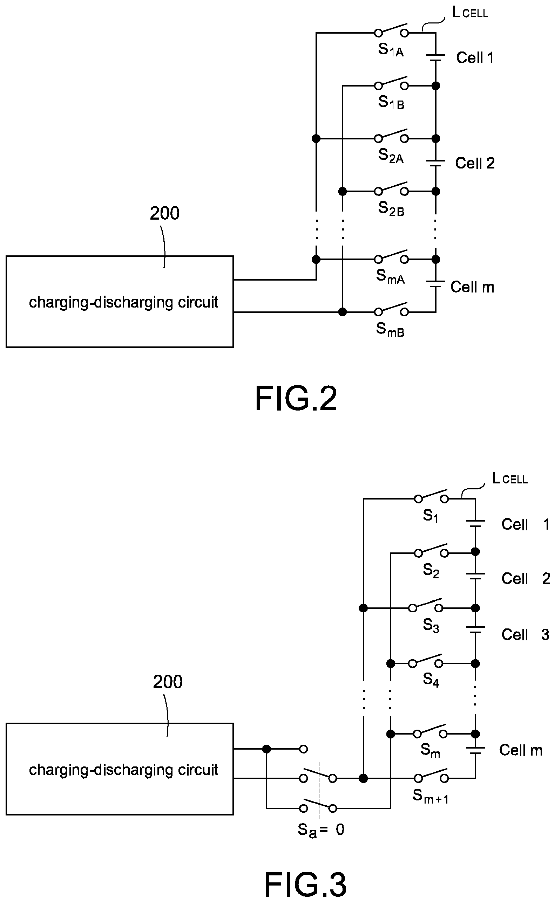

Please refer to FIG. 2, which shows a block circuit diagram of a switch unit of a battery cell balance circuit according to a first embodiment of the present disclosure. In FIG. 2, the battery cell balance circuit includes a plurality of (m) battery cells Cell 1-Cell m, and the battery cells Cell 1-Cell m are connected in series to form a battery link L_{CELL}. In the configuration structure of this embodiment, since a positive end and a negative end of each battery cell Cell 1-Cell m are respectively connected to a switch unit, that is, a positive end of a first battery cell Cell 1 is connected to a switch unit S_{1A} and a negative end of the first battery cell Cell 1 is connected to a switch unit S_{1B}, and a positive end of a second battery cell Cell 2 is connected to a switch unit S_{2A} and a negative end of the second battery cell Cell 2 is connected to a switch unit S_{2B}, and so on, the number of switch units is twice the number of battery cells. For example, if the number of the battery cells Cell 1-Cell m is 18, the number of the switch units is 36. In FIG. 2, the battery cells Cell 1-Cell m are connected to a charging-discharging circuit 200. In particular, positive ends of the battery cells Cell 1-Cell m are respectively connected to positive supplying ends or positive receiving ends of the charging-discharging circuit 200 through the switch units S_{1A}-S_{mA}. Similarly, negative ends of the battery cells Cell 1-Cell m are respectively connected to negative supplying ends or negative receiving ends of the charging-discharging circuit 200 through the switch units S_{1B}-S_{mB}.

Incidentally, the charging-discharging circuit 200 shown in FIG. 2 is used to provide a charging operation when a voltage of the battery cells Cell 1-Cell m (at least one of them) is too low to be charged, or a discharging operation when the voltage is too high to be discharged. That is, the charging-discharging circuit 200 may be, for example, but not limited to, a circuit having both charging and discharging functions, or two sets of circuits with separate charging and discharging functions.

Please refer to FIG. 3, which shows a block circuit diagram of the switch unit of the battery cell balance circuit according to a second embodiment of the present disclosure. In FIG. 3, the battery cell balance circuit includes a plurality of (m) battery cells Cell 1-Cell m, and the battery cells Cell 1-Cell m are connected in series to form a battery link L_{CELL}. In the configuration structure of this embodiment, since a positive end of the first battery cell Cell 1 is connected to a switch unit S₁, a negative end of the last battery cell Cell m is connected to a switch unit Sₘ₊₁, and the positive end and the negative end of the middle (the remaining) battery cells Cell 2 to Cell m-1 jointly connected to a switch unit S₂-Sₘ. Furthermore, a switch assembly Sa composed of four switch units (described in detail later), the charging and discharging operations of the battery cells Cell 1-Cell m are realized. Therefore, the number of the switch units is five more than the number of the battery cells. For example, if the number of the battery cells Cell 1-Cell m is 18, the number of the switch units is 23.

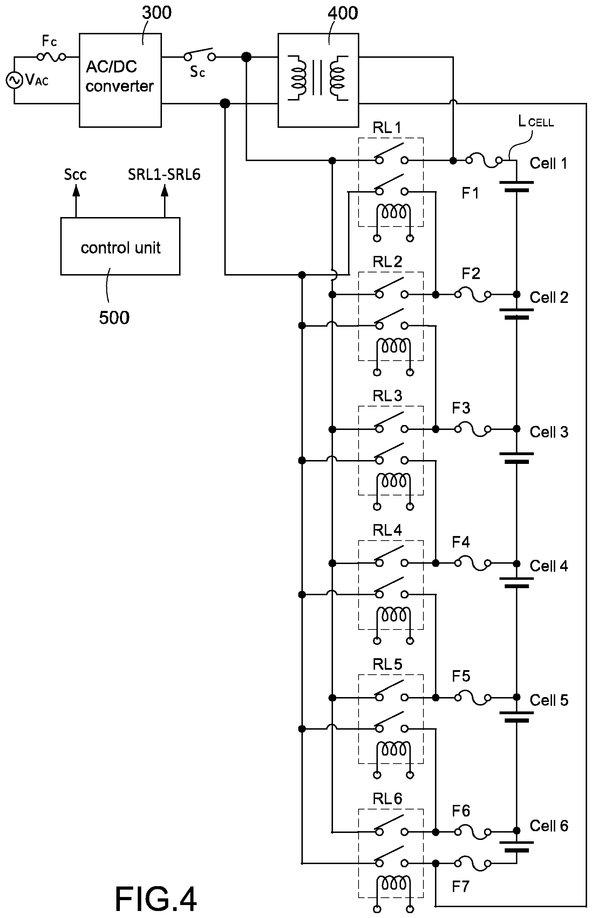

Please refer to FIG. 4, which shows a block circuit diagram of the switch unit of the battery cell balance circuit according to a third embodiment of the present disclosure. Compared with the previous embodiments of FIG. 2 and FIG. 3, the switch units shown in FIG. 4 are realized by electromagnetic relays RL1-RL6 (take the battery link L_{CELL} with 6 battery cells as an example). In other words, the excitation control of the electromagnetic relays RL1-RL6 is used so that the effect of turning on and turning off is implemented, and a path for charging and discharging operations of the battery cells Cell 1-Cell 6 is provided.

Specifically, take the embodiment of FIG. 4 as an example, the battery cell balance circuit mainly includes an AC/DC converter 300, a plurality of battery cells Cell 1-Cell 6, a plurality of switch units RL1-RL6, an isolated DC/DC converter 400, a control unit 500. The AC/DC converter 300 receives an AC power V_{AC}, and converts the AC power V_{AC} into a DC power. The battery cells Cell 1-Cell 6 are connected in series to form a battery link L_{CELL}. Each of the switch units RL1-RL6 is correspondingly connected to each of the battery cells Cell 1-Cell 6. In the embodiment shown in FIG. 4, each switch unit RL1 - RL6 is an electromagnetic relay, which uses the principle of electromagnetic effect to excite the coil to change states of the contact to implement the turned-on and the turned-off function. Moreover, the number of switch units RL1-RL6 is the same as that of battery cells Cell 1-Cell 6, that is, the first battery cell Cell 1 is connected to the first switch unit RL1, the second battery cell Cell 2 is connected to the second switch unit RL2, and so on.

An input side of the isolated DC/DC converter 400 is coupled in parallel to an input side of each of the switches RL1-RL6. Specifically, the input side of the isolated DC/DC converter 400 has a positive end and a negative end, and the positive end is connected to a positive end of the DC power converted from the AC/DC converter 300 and the negative end is connected to a negative end of the DC power. Each electromagnetic relay has a first side and a second side, and the first side and the second side have a positive end and a negative end, respectively. The positive end of the first side is coupled to the positive end of the DC power and the positive end of the input side of the isolated DC/DC converter 400, the negative end of the first side is coupled to the negative end of the DC power and the negative end of the input side of the isolated DC/DC converter 400, and the positive end and the negative end of the second side are correspondingly connected to the positive ends and the negative ends of the battery cells, respectively. In other words, the positive ends of the first sides of all the electromagnetic relays are jointly coupled, and then coupled to the positive end of the DC power and the positive end of the input side of the isolated DC/DC converter 400. Similarly, the negative ends of the first sides of all the electromagnetic relays are jointly coupled, and then coupled to the negative end of the DC power and the negative end of the input side of the isolated DC/DC converter 400.

Moreover, an output side of the isolated DC/DC converter 400 is coupled in series to the battery link L_{CELL}. The output side of the isolated DC/DC converter 400 has a positive end and a negative end, and the positive end is coupled to a positive end of the battery link L_{CELL} (i.e., a positive end of the first battery cell Cell 1) and the negative end is coupled to a negative end of the battery link L_{CELL} (i.e., a negative end of the sixth battery cell Cell 6) so that the output side of the isolated DC/DC converter 400 is coupled in series to the battery link L_{CELL}.

The circuit switch Sc is coupled between the AC/DC converter 300 and the isolated DC/DC converter 400, that is, between the AC/DC converter 300 and the switch units RL1-RL6. In one embodiment, the circuit switch Sc may be, for example, but not limited to, an electromagnetic relay or a transistor switch, such as a MOSFET.

During the charging process of the plurality of battery cells Cell 1-Cell 6, if all battery cells Cell 1-Cell 6 are normal, the battery voltages of all battery cells Cell 1-Cell 6 will not be abnormally high when fully charged. Similarly, during the discharging process of the plurality of battery cells Cell 1-Cell 6, if all battery cells Cell 1-Cell 6 are normal, the battery voltages of all battery cells Cell 1-Cell 6 will not be abnormally low when fully discharged.

Once the battery voltage of any one of the battery cells Cell 1-Cell 6 is too high (abnormally high) during the charging process, the electrical energy of the battery cell with the too-high battery voltage is released to the battery link L_{CELL} so that battery voltage of the battery cell is reduced and the battery cell is not over charged. In addition, once the battery voltage of any one of the battery cells Cell 1-Cell 6 is too low (abnormally low) during the discharging process, the AC power V_{AC} provides electrical energy to the battery cell with the too-low battery voltage so that the battery voltage of the battery cell is increased and the battery cell is not over discharged.

Specifically, during the charging process of the battery cells Cell 1-Cell 6, when the control unit 500 detects that a battery voltage of any one of the battery cells Cell 1-Cell 6 is greater than the upper threshold voltage, the control unit 500 provides switch control signals SRL1-SRL6 to turn on the switch unit RL1-RL6 corresponding to the battery cell with the too-high battery voltage so that the electrical energy of the battery cell Cell 1-Cell 6 with the too-high battery voltage is released to the battery link L_{CELL} through the isolated DC/DC converter 400. For example, when the control unit 500 detects that the battery voltage of the first battery cell Cell 1 is too high (i.e., the battery voltage is greater than the upper threshold voltage), the control unit 500 turns on the first switch unit RL1 by the first switch control signal SRL1 so that the electrical energy of the first battery cell is released to the battery link L_{CELL} through the first switch unit RL1 and the isolated DC/DC converter 400. In addition to reducing the battery voltage of the first battery cell Cell 1 to prevent over-charging, the electrical energy of the first battery cell Cell 1 can also be used as the electrical energy for charging the battery link L_{CELL} without wasting. Similarly, the operation principles of other battery cells are the same as those described above, and the detail description is omitted here for conciseness.

During the discharging process of the battery cells Cell 1-Cell 6, when the control unit 500 detects that a battery voltage of any one of the battery cells Cell 1-Cell 6 is less than the lower threshold voltage, the control unit 500 provides a switch control signal Sec to turn on the circuit switch Sc, and provides switch control signals SRL1-SRL6 to turn on the switch unit RL1-RL6 corresponding to the battery cell with the too-low battery voltage so that the battery cell Cell 1-Cell 6 with the too-low battery voltage receives electrical energy provided from the AC power V_{AC}. In particular, the lower threshold voltage is less than the upper threshold voltage. For example, when the control unit 500 detects that the battery voltage of the first battery cell Cell 1 is too low (i.e., the battery voltage is less than the lower threshold voltage), the control unit 500 turns on the circuit switch Sc by the switch control signal Scc, and turns on the first switch unit RL1 by the first switch control signal SRL1 so that the AC power V_{AC} supplies power to the first battery cell Cell 1 (i.e., provides the electrical energy to the first battery cell Cell 1) through the circuit switch Sc and the first switch unit RL1, thereby increasing the battery voltage of the first battery cell Cell 1 to prevent over-discharging. Similarly, the operation principles of other battery cells are the same as those described above, and the detail description is omitted here for conciseness.

Accordingly, the battery voltage is adjusted through the release and supplement of electrical energy for the more seriously aged battery cells, that is, when the battery voltage of the battery cell is too high, the electrical energy is transmitted to the battery link, and when the battery voltage of the battery cell is too low, the electrical energy is supplemented by the AC power. Therefore, the battery voltage of the more severely aged battery cells during the charging and discharging processes can be maintained to be approximately the same as the battery voltage of other battery cells so as to ensure the normal operation of the overall battery module. Accordingly, in the application of the energy storage system, the operation of the battery module can be continuously maintained without requiring frequent replacement of battery cells. Until the annual repair, the seriously aged battery cells will be replaced in order to improve the economic benefits of the application of the energy storage system.

Please refer to FIG. 4 again, the battery cell balance circuit further includes a plurality of over-current protection components correspondingly coupled to the battery cells Cell 1-Cell 6. In one embodiment, the over-current protection components are fuses F1-F7. During the charging and discharging process, if an overcurrent abnormality occurs, an overcurrent protection can be provided through the corresponding fuses F1-F7 to protect the battery cells Cell 1-Cell 6.

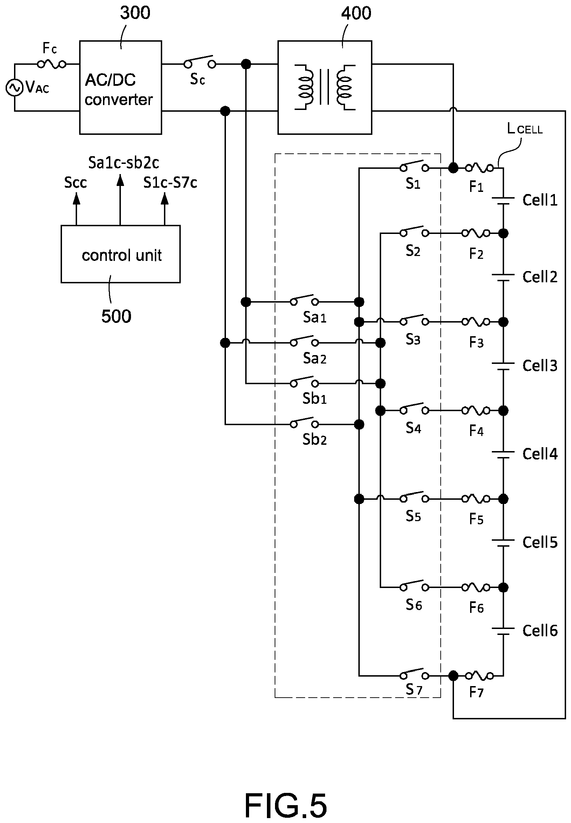

Please refer to FIG. 5, which shows a block circuit diagram of the battery cell balance circuit according to a preferred embodiment of the present disclosure, and the FIG. 5 is cooperated with the embodiment shown in FIG. 3 (i.e., the second embodiment of the switch unit). Take the battery link L_{CELL} with 6 battery cells as an example, the battery cell balance circuit mainly includes an AC/DC converter 300, an isolated DC/DC converter 400, a control unit 500, a plurality of (6) battery cells Cell 1-Cell 6 (connected in series to form a battery link L_{CELL}), a plurality of (7) switch units S₁-S₇, and a switch assembly Sa having a plurality of switch units Sa1, Sa2, Sb1, Sb2. The control unit 500 provides switch control signals S1c-S7c to correspondingly control the switch units S₁-S₇, provides switching switch control signals Salc-Sb2c to correspondingly control the switch units Sa1, Sa2, Sb1, Sb2, and provides a switch control signal S_{CC} to control the circuit switch S_{C}. In this embodiment, due to the configuration design (connection relationship) of the switch units S₁-S₇, for a battery module with more battery cells, the number of switch units may be significantly reduced (as described in FIG. 3 above). Therefore, with the turning on and turning off the switch units Sa1, Sa2, Sb1, Sb2, a path for providing the charging and discharging operations of the battery cells Cell 1-Cell 6 can be implemented.

Specifically, during the charging process of the battery cells Cell 1-Cell 6, when the control unit 500 detects that a battery voltage of any one of the battery cells Cell 1-Cell 6 is greater than the upper threshold voltage, the control unit 500 provides switch control signals S1c-S7c toturn on the switch unit S₁-S₇ corresponding to the battery cell with the too-high battery voltage so that the electrical energy of the battery cell Cell 1-Cell 6 with the too-high battery voltage is released to the battery link L_{CELL} through the isolated DC/DC converter 400. For example, when the control unit 500 detects that the battery voltage of the first battery cell Cell 1 is too high (i.e., the battery voltage is greater than the upper threshold voltage), the control unit 500 turns on the first switching switch unit Sa1 by the first switching switch control signal Sa1c, turns on the second switching switch unit Sa2 by the second switching switch control signals Sa2c, turns on the first switch unit S₁ by the first switch control signal S1c, and turns on the second switch unit S₂ by the second switch control signal S2c so that the electrical energy of the first battery cell is released to the battery link L_{CELL} through the first switch unit S₁, the second switch unit S₂, the first switching switch unit Sa1, the second switching switch unit Sa2, and the isolated DC/DC converter 400. In addition to reducing the battery voltage of the first battery cell Cell 1 to prevent over-charging, the electrical energy of the first battery cell Cell 1 can also be used as the electrical energy for charging the battery link L_{CELL} without wasting.

For example, when the control unit 500 detects that the battery voltage of the second battery cell Cell 2 is too high (i.e., the battery voltage is greater than the upper threshold voltage), the control unit 500 turns on the third switching switch unit Sb1 by the third switching switch control signal Sb1c, turns on the fourth switching switch unit Sb2 by the fourth switching switch control signals Sb2c, turns on the second switch unit S₂ by the second switch control signal S2c, and turns on the third switch unit S₃ by the third switch control signal S3c so that the electrical energy of the second battery cell is released to the battery link L_{CELL} through the second switch unit S₂, the third switch unit S₃, the third switching switch unit Sb1, the fourth switching switch unit Sb2, and the isolated DC/DC converter 400. In addition to reducing the battery voltage of the second battery cell Cell 2 to prevent over-charging, the electrical energy of the second battery cell Cell 2 can also be used as the electrical energy for charging the battery link L_{CELL} without wasting.

During the discharging process of the battery cells Cell 1-Cell 6, when the control unit 500 detects that a battery voltage of any one of the battery cells Cell 1-Cell 6 is less than the lower threshold voltage, the control unit 500 provides a switch control signal S_{CC} to turn on the circuit switch S_{C}, and provides switch control signals S1c-S7c to turn on the switch unit S₁-S₇ corresponding to the battery cell with the too-low battery voltage so that the battery cell Cell 1-Cell 6 with the too-low battery voltage receives electrical energy provided from the AC power V_{AC}. For example, when the control unit 500 detects that the battery voltage of the first battery cell Cell 1 is too low (i.e., the battery voltage is less than the lower threshold voltage), the control unit 500 turns on the circuit switch Sc by the switch control signal Scc, turns on the first switching switch unit Sa1 by the first switching switch control signal Sa1c, turns on the second switching switch unit Sa2 by the second switching switch control signal Sa2c, turns on the first switch unit S₁ by the first switch control signal S1c, and turns on the second switch unit S₂ by the second switch control signal S2c so that the AC power V_{AC} supplies power to the first battery cell Cell 1 (i.e., provides the electrical energy to the first battery cell Cell 1) through the circuit switch S_{C}, the first switching switch unit Sa1, the second switching switch unit Sa2, the first switch unit S₁, and the second switch unit S₂, thereby increasing the battery voltage of the first battery cell Cell 1 to prevent over-discharging.

For example, when the control unit 500 detects that the battery voltage of the second battery cell Cell 2 is too low (i.e., the battery voltage is less than the lower threshold voltage), the control unit 500 turns on the circuit switch Sc by the switch control signal S_{CC}, turns on the third switching switch unit Sb1 by the third switching switch control signal Sb1c, turns on the fourth switching switch unit Sb2 by the fourth switching switch control signal Sb2c, turns on the second switch unit S₂ by the second switch control signal S2c, and turns on the third switch unit S₃ by the third switch control signal S3c so that the AC power V_{AC} supplies power to the second battery cell Cell 2 (i.e., provides the electrical energy to the second battery cell Cell 2) through the circuit switch S_{C}, the third switching switch unit Sb1, the fourth switching switch unit Sb2, the second switch unit S₂, and the third switch unit S₃, thereby increasing the battery voltage of the second battery cell Cell 2 to prevent over-discharging.

Accordingly, the control principle of the switch assembly Sa (including switching switch units Sa1,Sa2,Sb1,Sb2) and the switch units S₁-S₇ of the battery cell balance circuit shown in FIG. 5 is: according to the positive end and the negative end of the DC power converted and outputted by the AC/DC converter 300, the positive end and the negative end of the battery cells Cell 1-Cell 6 with the too-high battery voltage (or too-low battery voltage) are consistent so as to implement the adjustment of the battery voltage through the energy release and energy replenishment for the seriously aged battery cells.

Similarly, the first embodiment of the switch unit shown in FIG. 2 may also be applied to the structure of FIG. 5, and the control principle of the switch unit is similar to that of FIG. 5, and the detail description is omitted here for conciseness.

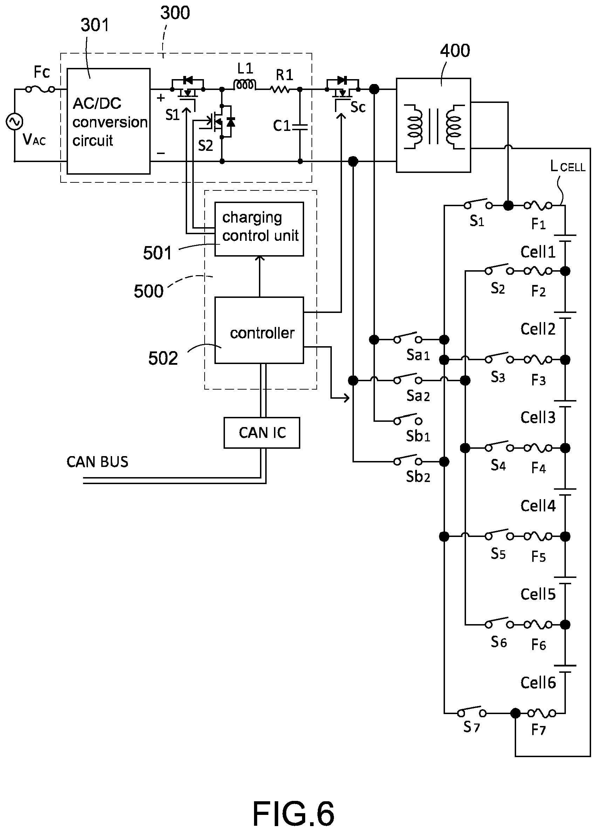

Please refer to FIG. 6, which shows a detailed block circuit diagram of the battery cell balance circuit according to the preferred embodiment of the present disclosure. The FIG. 6 more specifically discloses that the AC/DC converter 300 includes an AC/DC conversion circuit 301 and a non-isolated DC/DC conversion. In this embodiment, the non-isolated DC/DC conversion circuit is a step-down conversion circuit, which includes a switch S1, a switch S2, an inductor L1, a capacitor C1, and a resistor R1. The control unit 500 includes a charging control unit 501 and a controller 502 for controlling charging and discharging operations of the battery cells Cell 1-Cell 6. Moreover, the battery cell balance circuit further includes a controller area network (CAN) involving a CAN IC and CAN bus. Therefore, the results of the detection and control of overall circuit by the control unit 500 are transmitted to the outside (external system) through the CAN so as to facilitate remote operators to acquire monitoring and control, thereby performing maintenance immediately to maintain the normal operation of the system.

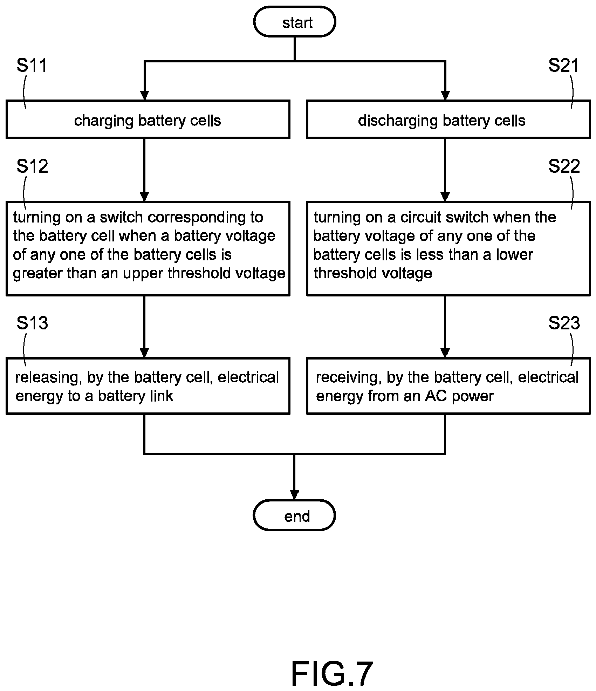

Please refer to FIG. 7, which shows a flowchart of a method of operating the battery cell balance circuit according to the present disclosure. The battery cell balance circuit includes a plurality of battery cells connected in series to form a battery link, a plurality of switches, each of the switches correspondingly connected to each of the battery cells, and a circuit switch coupled between a DC power and the switches. The specific structure of the battery cell balance circuit may be found in the previous disclosure, and the detail description is omitted here for conciseness. The method of operating the battery cell balance circuit of the present disclosure includes steps of charging the battery cells (S11) and discharging the battery cells (S21). When a battery voltage of any one of the battery cells is detected to be greater than an upper threshold voltage during the charging of the battery cells, controlling the switch corresponding to the battery cell to be turned on (S12). Furthermore, releasing electrical energy of the battery cell to the battery link (S13). When a battery voltage of any one of the battery cells is detected to be less than a lower threshold voltage during the discharging of the battery cells, controlling the circuit switch to be turned on, and controlling the switch corresponding to the battery cell to be turned on (S22). Moreover, the battery cell receives the electrical energy provided from the AC power (S23).

In summary, the advantages and features of the present disclosure are:
1. The battery cell balance circuit of the present disclosure adjusts the battery voltage through the release and supplement of electrical energy for the more seriously aged battery cells. That is, when the battery voltage of the battery cell is too high, the electrical energy is transmitted to the battery link, and when the battery voltage of the battery cell is too low, the electrical energy is supplemented by the AC power. Therefore, the battery voltage of the more severely aged battery cells during the charging and discharging processes can be maintained to be approximately the same as the battery voltage of other battery cells so as to ensure the normal operation of the overall battery module. Accordingly, in the application of the energy storage system, the operation of the battery module can be continuously maintained without requiring frequent replacement of battery cells. Until the annual repair, the seriously aged battery cells will be replaced in order to improve the economic benefits of the application of the energy storage system.
2. The selected battery modules are coupled to the battery cell balance circuit through solid state switches. In such circuit configuration, switches can use solid state switches instead of double pole single throw switches (traditional solenoid valve switches), thereby increasing switch life in battery cell balance circuit and optimizing voltage differences between battery modules.
3. For battery link charging: select the battery cell with the highest battery voltage, recover its energy, and feed it back to the battery link to extend the charging time of the battery link.
4. For battery link discharging: select the battery cell with the lowest battery voltage, and charge it from the AC power to extended the discharging time of the battery link.

## Claims

1. A battery cell balance circuit, comprising
a plurality of battery cells (Cell 1-Cell m, Cell 1-Cell 6),
a plurality of switches (S_{1A}-S_{mB}, S₁-Sₘ₊₁, RL1-RL6), each of the switches (S_{1A}-S_{mB}, S₁-Sₘ₊₁, RL1-RL6) correspondingly connected to each of the battery cells (Cell 1-Cell m, Cell 1-Cell 6), and
an AC/DC converter (300), configured to receive an AC power (V_{AC}) and convert the AC power (V_{AC}) into a DC power,
**characterized in that** the battery cell balance circuit further comprises:
an isolated DC/DC converter (400), an input side of the isolated DC/DC converter (400) coupled in parallel to an input side of each of the switches (S_{1A}-S_{mB}, S₁-Sₘ₊₁, RL1-RL6), and an output side of the isolated DC/DC converter (400) coupled to a battery link (L_{CELL}), wherein the plurality of battery cells (Cell 1-Cell m, Cell 1-Cell 6) are connected in series to form a battery link (L_{CELL}),
a circuit switch (S_{C}), coupled between the AC/DC converter (300), the isolated DC/DC converter (400), and the plurality of switches (S_{1A}-S_{mB}, S₁-Sₘ₊₁, RL1-RL6), and
a control unit (500), configured to provide a plurality of control signals (SRL1-SRL6, S1c-S7c, S_{CC}) to correspondingly control the plurality of switches (S_{1A}-S_{mB}, S₁-Sₘ₊₁, RL1-RL6) and the circuit switch (S_{C}).

2. The battery cell balance circuit as claimed in claim 1, wherein when the control unit (500) detects a battery voltage of any one of the battery cells (Cell 1-Cell m, Cell 1-Cell 6) is greater than an upper threshold voltage, the control unit (500) turns on the switch (S_{1A}-S_{mB}, S₁-Sₘ₊₁, RL1-RL6) corresponding to the battery cell so that electrical energy of the battery cell (Cell 1-Cell m, Cell 1-Cell 6) is released to the battery link (L_{CELL}) through the isolated DC/DC converter (400).

3. The battery cell balance circuit as claimed in claim 1, wherein when the control unit (500) detects that a battery voltage of any one of the battery cells (Cell 1-Cell m, Cell 1-Cell 6) is less than a lower threshold voltage, the control unit (500) turns on the circuit switch (S_{C}) and turns on the switch (S_{1A}-S_{mB}, S₁-Sₘ₊₁, RL1-RL6) corresponding to the battery cell (Cell 1-Cell m, Cell 1-Cell 6) so that the battery cell receives the electrical energy from the AC power (V_{AC}).

4. The battery cell balance circuit as claimed in claim 1, wherein the switches (RL1-RL6) are electromagnetic relays (RL1-RL6),
a first positive end of each of the switches (RL1-RL6) connected to a positive end of the DC power, and a first negative end of each of the switches (RL1-RL6) connected to a negative end of the DC power,
a second positive end of each of the switches (RL1-RL6) correspondingly connected to a positive end of the battery cell (Cell 1-Cell m, Cell 1-Cell 6), and a second negative end of the switches (RL1-RL6) correspondingly connected to a negative end of the battery cell (Cell 1-Cell m, Cell 1-Cell 6).

5. The battery cell balance circuit as claimed in claim 1, wherein the switches (S_{1A}-S_{mB}) comprise a plurality of switch units (S_{1A}-S_{mB}),
the positive end of each of the battery cells (Cell 1-Cell m, Cell 1-Cell 6) respectively connected to a first end of one switch unit (S_{1A}-S_{mB}), and second ends of the switch units (S_{1A}-S_{mB}) jointly connected to a positive end of the DC power,
the negative end of each of the battery cells (Cell 1-Cell m, Cell 1-Cell 6) respectively connected to a first end of one switch unit (S_{1A}-S_{mB}), and second ends of the switch units (S_{1A}-S_{mB}) jointly connected to a negative end of the DC power.

6. The battery cell balance circuit as claimed in claim 1, wherein the switches (S₁-Sₘ₊₁, Sa, Sa1-Sb2) comprise a plurality of switch units (S₁-Sₘ₊₁) and a switch assembly (Sa, Sa1-Sb2),
a positive end of a first battery cell of the battery cells (Cell 1-Cell m, Cell 1-Cell 6) connected to a first end of one switch unit (S₁-Sₘ₊₁), a negative end of a last battery cell of the battery cells (Cell 1-Cell m, Cell 1-Cell 6) connected to a first end of one switch unit (S₁-Sₘ₊₁), and the positive end and the negative end of the middle battery cells (Cell 1-Cell m, Cell 1-Cell 6) jointly connected to a first end of one switch unit (S₁-Sₘ₊₁),
the switch assembly (Sa, Sa1-Sb2) comprises a plurality of switching switch units (Sa1-Sb2),
wherein second ends of the switch units (S₁-Sₘ₊₁) are correspondingly connected to the switching switch units (Sa1-Sb2) so that the positive ends of the battery cells (Cell 1-Cell m, Cell 1-Cell 6) are correspondingly connected to a positive end of the DC power and the negative ends of the battery cells (Cell 1-Cell m, Cell 1-Cell 6) are correspondingly connected to a negative end of the DC power.

7. The battery cell balance circuit as claimed in claim 1, wherein the AC/DC converter (300) comprises an AC/DC conversion circuit and a non-isolated DC/DC conversion circuit; the non-isolated DC/DC conversion circuit is a buck conversion circuit comprising two switches (S1, S2) and one inductor (L1).

8. The battery cell balance circuit as claimed in claim 1, wherein the control unit (500) comprises a battery charge control unit (500) and a controller configured to control charging and discharging operations of the battery cells (Cell 1-Cell m, Cell 1-Cell 6).

9. The battery cell balance circuit as claimed in claim 1, further comprising:
a plurality of over-current protection components (F1-F7) correspondingly connected between the switches and the battery cells (Cell 1-Cell m, Cell 1-Cell 6).

10. A method of operating a battery cell balance circuit, the battery cell balance circuit comprising a plurality of battery cells (Cell 1-Cell m, Cell 1-Cell 6) connected in series to form a battery link (L_{CELL}), a plurality of switches (S_{1A}-S_{mB}, S₁-Sₘ₊₁, RL1-RL6), each of the switches (S_{1A}-S_{mB}, S₁-Sₘ₊₁, RL1-RL6) correspondingly connected to each of the battery cells (Cell 1-Cell m, Cell 1-Cell 6), and a circuit switch (S_{C}) coupled between a DC power and the switches (S_{1A}-S_{mB}, S₁-Sₘ₊₁, RL1-RL6), **characterized in that** the method comprises steps of:
controlling the switch (S_{1A}-S_{mB}, S₁-Sₘ₊₁, RL1-RL6) corresponding to the battery cell (Cell 1-Cell m, Cell 1-Cell 6) to be turned on when a battery voltage of any one of the battery cells (Cell 1-Cell m, Cell 1-Cell 6) is detected to be greater than an upper threshold voltage,
releasing electrical energy of the battery cell (Cell 1-Cell m, Cell 1-Cell 6) to the battery link (L_{CELL}),
controlling the circuit switch (S_{C}) to be turned on and controlling the switch (S_{1A}-S_{mB}, S₁-Sₘ₊₁, RL1-RL6) corresponding to the battery cell (Cell 1-Cell m, Cell 1-Cell 6) to be turned on when the battery voltage of any one of the battery cells (Cell 1-Cell m, Cell 1-Cell 6) is detected to be less than a lower threshold voltage, and
receiving, by the battery cell (Cell 1-Cell m, Cell 1-Cell 6), the electrical energy from the DC power.

11. The method of operating the battery cell balance circuit as claimed in claim 10, wherein the battery cell balance circuit further comprises:
an isolated DC/DC converter (400), an input side of the isolated DC/DC converter (400) coupled in parallel to an input side of each of the switches (S_{1A}-S_{mB}, S₁-Sₘ₊₁, RL1-RL6), and an output side of the isolated DC/DC converter (400) coupled to the battery link (L_{CELL}),
wherein the electrical energy of the battery cell (Cell 1-Cell m, Cell 1-Cell 6) is released to the battery link (L_{CELL}) through the isolated DC/DC converter (400).

12. The method of operating the battery cell balance circuit as claimed in claim 10, wherein the battery cell balance circuit further comprises:
an AC/DC converter (300), configured to receive an AC power (V_{AC}) and convert the AC power (V_{AC}) into the DC power,
wherein the circuit switch (S_{C}) is coupled to the AC power (V_{AC}) through the AC/DC converter (300).

13. The method of operating the battery cell balance circuit as claimed in claim 10, wherein the switches (RL1-RL6) are electromagnetic relays (RL1-RL6),
a first positive end of each of the switches (RL1-RL6) connected to a positive end of the DC power, and a first negative end of each of the switches (RL1-RL6) connected to a negative end of the DC power,
a second positive end of each of the switches (RL1-RL6) correspondingly connected to a positive end of the battery cell (Cell 1-Cell m, Cell 1-Cell 6), and a second negative end of the switches (RL1-RL6) correspondingly connected to a negative end of the battery cell (Cell 1-Cell m, Cell 1-Cell 6).

14. The method of operating the battery cell balance circuit as claimed in claim 10, wherein the switches (S_{1A}-S_{mB}) comprise a plurality of switch units (S_{1A}-S_{mB}),
the positive end of each of the battery cells (Cell 1-Cell m, Cell 1-Cell 6) respectively connected to a first end of one switch unit (S_{1A}-S_{mB}), and second ends of the switch units (S_{1A}-S_{mB}) jointly connected to a positive end of the DC power,
the negative end of each of the battery cells (Cell 1-Cell m, Cell 1-Cell 6) respectively connected to a first end of one switch unit (S_{1A}-S_{mB}), and second ends of the switch units (S_{1A}-S_{mB}) jointly connected to a negative end of the DC power.

15. The method of operating the battery cell balance circuit as claimed in claim 10, wherein the switches (S₁-Sₘ₊₁, Sa1-Sb2) comprise a plurality of switch units (S₁-Sₘ₊₁) and a switch assembly (Sa, Sa1-Sb2),
a positive end of a first battery cell of the battery cells (Cell 1-Cell m, Cell 1-Cell 6) connected to a first end of one switch unit (S₁-Sₘ₊₁), a negative end of a last battery cell of the battery cells (Cell 1-Cell m, Cell 1-Cell 6) connected to a first end of one switch unit (S₁-Sₘ₊₁), and the positive end and the negative end of the middle battery cells (Cell 1-Cell m, Cell 1-Cell 6) jointly connected to a first end of one switch unit (S₁-Sₘ₊₁),
the switch assembly (Sa, Sa1-Sb2) comprises a plurality of switching switch units (Sa, Sa1-Sb2),
wherein second ends of the switch units (S₁-Sₘ₊₁) are correspondingly connected to the switching switch units (Sa, Sa1-Sb2) so that the positive ends of the battery cells (Cell 1-Cell m, Cell 1-Cell 6) are correspondingly connected to a positive end of the DC power and the negative ends of the battery cells (Cell 1-Cell m, Cell 1-Cell 6) are correspondingly connected to a negative end of the DC power.

## Patentansprüche

1. Batteriezellenausgleichsschaltung, umfassend
eine Vielzahl von Batteriezellen (Zelle 1-Zelle m, Zelle 1-Zelle 6),
eine Vielzahl von Schaltern (S_{1A} -S_{mB} , S₁ -Sₘ₊₁ , RL1-RL6), wobei jeder der Schalter (S_{1A} -S_{mB} , S₁ -Sₘ₊₁ , RL1-RL6) entsprechend mit jeder der Batteriezellen (Zelle 1-Zelle m, Zelle 1-Zelle 6) verbunden ist, und
einen AC/DC-Wandler (300), der so konfiguriert ist, dass er eine AC-Leistung (V_{AC} ) empfängt und die AC-Leistung (V_{AC} ) in eine DC-Leistung umwandelt,
**dadurch gekennzeichnet, dass** der Batteriezellenausgleichsschaltkreis weiterhin umfasst:
einen isolierten DC/DC-Wandler (400), wobei eine Eingangsseite des isolierten DC/DC-Wandlers (400) parallel zu einer Eingangsseite jedes der Schalter (S_{1A} -S_{mB} , S₁ -Sₘ₊₁ , RL1-RL6) gekoppelt ist, und eine Ausgangsseite des isolierten DC/DC-Wandlers (400) mit einer Batterieverbindung (L_{CELL} ) gekoppelt ist, wobei die Mehrzahl von Batteriezellen (Zelle 1-Zelle m, Zelle 1-Zelle 6) in Reihe geschaltet sind, um eine Batterieverbindung (L_{CELL} ) zu bilden,
einen Schaltkreisschalter (S_{C} ), der zwischen dem AC/DC-Wandler (300), dem isolierten DC/DC-Wandler (400) und der Vielzahl von Schaltern (S_{1A} -S_{mB} , S₁ -Sₘ₊₁ , RL1-RL6) gekoppelt ist, und
eine Steuereinheit (500), die so konfiguriert ist, dass sie eine Vielzahl von Steuersignalen (SRL1-SRL6, S1c-S7c, S_{CC} ) bereitstellt, um die Vielzahl von Schaltern (S_{1A} -S_{mB} , S₁ -Sₘ+₁ , RL1-RL6) und den Schaltkreisschalter (S_{C} ) entsprechend zu steuern.

2. Batteriezellenausgleichsschaltung nach Anspruch 1, wobei, wenn die Steuereinheit (500) erkennt, dass die Batteriespannung einer der Batteriezellen (Zelle 1-Zelle m, Zelle 1-Zelle 6) größer ist als eine obere Schwellenspannung, die Steuereinheit (500) den Schalter (S_{1A} -S_{mB} , S₁ -Sₘ₊₁ , RL1-RL6), der der Batteriezelle entspricht, einschaltet, so dass elektrische Energie der Batteriezelle (Zelle 1-Zelle m, Zelle 1-Zelle 6) über den isolierten DC/DC-Wandler (400) an die Batterieverbindung (L_{CELL} ) abgegeben wird.

3. Batteriezellenausgleichsschaltung nach Anspruch 1, wobei, wenn die Steuereinheit (500) erkennt, dass eine Batteriespannung einer der Batteriezellen (Zelle 1 - Zelle m, Zelle 1 - Zelle 6) kleiner ist als eine untere Schwellenspannung, die Steuereinheit (500) den Schaltkreisschalter (S_{C} ) einschaltet und den Schalter (S_{1A} -S_{mB} , S₁ -Sₘ₊₁ , RL1-RL6), der der Batteriezelle (Zelle 1-Zelle m, Zelle 1-Zelle 6) entspricht, einschaltet, so dass die Batteriezelle die elektrische Energie von der Wechselstromversorgung (V_{AC} ) erhält.

4. Batteriezellenausgleichsschaltung nach Anspruch 1, wobei die Schalter (RL1-RL6) elektromagnetische Relais (RL1-RL6) sind,
ein erstes positives Ende jedes der Schalter (RL1-RL6), das mit einem positiven Ende der Gleichstromversorgung verbunden ist, und ein erstes negatives Ende jedes der Schalter (RL1-RL6), das mit einem negativen Ende der Gleichstromversorgung verbunden ist,
ein zweites positives Ende jedes der Schalter (RL1-RL6), das entsprechend mit einem positiven Ende der Batteriezelle (Zelle 1-Zelle m, Zelle 1-Zelle 6) verbunden ist, und ein zweites negatives Ende der Schalter (RL1-RL6), das entsprechend mit einem negativen Ende der Batteriezelle (Zelle 1-Zelle m, Zelle 1-Zelle 6) verbunden ist.

5. Batteriezellenausgleichsschaltung nach Anspruch 1, wobei die Schalter (S_{1A} -S_{mB}) eine Vielzahl von Schaltereinheiten (S_{1A} -S_{mB} ) umfassen,
wobei das positive Ende jeder der Batteriezellen (Zelle 1 - Zelle m, Zelle 1 - Zelle 6) jeweils mit einem ersten Ende einer Schalteinheit (S_{1A} - S_{mB} ) verbunden ist und die zweiten Enden der Schalteinheiten (S_{1A} - S_{mB} ) gemeinsam mit einem positiven Ende der Gleichstromversorgung verbunden sind,
wobei das negative Ende jeder der Batteriezellen (Zelle 1 - Zelle m, Zelle 1 - Zelle 6) jeweils mit einem ersten Ende einer Schalteinheit (S_{1A} - S_{mB} ) verbunden ist und die zweiten Enden der Schalteinheiten (S_{1A} - S_{mB} ) gemeinsam mit einem negativen Ende der Gleichstromversorgung verbunden sind.

6. Batteriezellenausgleichsschaltung nach Anspruch 1, wobei die Schalter (S₁ -Sₘ₊₁ , Sa, Sa1-Sb2) eine Vielzahl von Schaltereinheiten (S₁ -Sₘ₊₁ ) und eine Schalterbaugruppe (Sa, Sa1-Sb2) umfassen,
ein positives Ende einer ersten Batteriezelle der Batteriezellen (Zelle 1-Zelle m, Zelle 1-Zelle 6), das mit einem ersten Ende einer Schaltereinheit (S₁ -Sₘ₊₁ ) verbunden ist, ein negatives Ende einer letzten Batteriezelle der Batteriezellen (Zelle 1-Zelle m, Zelle 1-Zelle m, Zelle 1-Zelle 6), die mit einem ersten Ende einer Schalteinheit (S₁ -Sₘ₊₁ ) verbunden ist, und das positive Ende und das negative Ende der mittleren Batteriezellen (Zelle 1-Zelle m, Zelle 1-Zelle 6) gemeinsam mit einem ersten Ende einer Schalteinheit (S₁ -Sₘ₊₁ ) verbunden,
die Schalterbaugruppe (Sa, Sa1-Sb2) umfasst eine Vielzahl von Schaltereinheiten (Sa1-Sb2),
wobei zweite Enden der Schalteinheiten (S₁ -Sₘ₊₁ ) entsprechend mit den Schaltschalteinheiten (Sa1-Sb2) verbunden sind, so dass die positiven Enden der Batteriezellen (Zelle 1-Zelle m, Zelle 1-Zelle 6) entsprechend mit einem positiven Ende des Gleichstroms verbunden sind und die negativen Enden der Batteriezellen (Zelle 1-Zelle m, Zelle 1-Zelle 6) entsprechend mit einem negativen Ende des Gleichstroms verbunden sind.

7. Batteriezellenausgleichsschaltung nach Anspruch 1, wobei der AC/DC-Wandler (300) eine AC/DC-Wandlerschaltung und eine nicht isolierte DC/DC-Wandlerschaltung umfasst; die nicht isolierte DC/DC-Wandlerschaltung ist eine Abwärtswandlerschaltung, die zwei Schalter (S1, S2) und eine Induktivität (L1) umfasst.

8. Batteriezellenausgleichsschaltung nach Anspruch 1, wobei die Steuereinheit (500) eine Batterieladesteuerungseinheit (500) und einen Controller umfasst, der so konfiguriert ist, dass er Lade- und Entladevorgänge der Batteriezellen (Zelle 1-Zelle m, Zelle 1-Zelle 6) steuert.

9. Die Batteriezellenausgleichsschaltung nach Anspruch 1, die ferner Folgendes umfasst:
eine Vielzahl von Überstromschutzkomponenten (F1-F7), die entsprechend zwischen den Schaltern und den Batteriezellen (Zelle 1-Zelle m, Zelle 1-Zelle 6) angeschlossen sind.

10. Verfahren zum Betreiben einer Batteriezellenausgleichsschaltung, wobei die Batteriezellenausgleichsschaltung eine Vielzahl von Batteriezellen (Zelle 1-Zelle m, Zelle 1-Zelle 6), die in Reihe geschaltet sind, um eine Batterieverbindung (L_{CELL} ) zu bilden, eine Vielzahl von Schaltern (S_{1A} -S_{mB} , S₁ -Sₘ₊₁ , RL1-RL6) umfasst, wobei jeder der Schalter (S_{1A} -S_{mB} , S₁ -Sₘ₊₁ , RL1-RL6) entsprechend mit jeder der Batteriezellen (Zelle 1-Zelle m, Zelle 1-Zelle 6) verbunden ist, und einen Schaltkreisschalter (S_{C} ), der zwischen einer Gleichstromversorgung und den Schaltern (S_{1A} -S_{mB} , S₁ -Sₘ₊₁ , RL1-RL6) gekoppelt ist, **dadurch gekennzeichnet, dass** das Verfahren die folgenden Schritte umfasst:
Steuern des Schalters (S_{1A} -S_{mB} , S₁ -Sₘ₊₁ , RL1-RL6), der der Batteriezelle (Zelle 1-Zelle m, Zelle 1-Zelle 6) entspricht, um eingeschaltet zu werden, wenn eine Batteriespannung einer der Batteriezellen (Zelle 1-Zelle m, Zelle 1-Zelle 6) als größer als eine obere Schwellenspannung erkannt wird,
Abgabe der elektrischen Energie der Batteriezelle (Zelle 1-Zelle m, Zelle 1-Zelle 6) an die Batterieverbindung (L_{CELL} ),
Steuern des Einschaltens des Schaltkreisschalters (S_{C} ) und Steuern des Einschaltens des Schalters (S_{1A} -S_{mB} , S₁ -Sₘ₊₁ , RL1-RL6), der der Batteriezelle (Zelle 1-Zelle m, Zelle 1-Zelle 6) entspricht, wenn festgestellt wird, dass die Batteriespannung einer der Batteriezellen (Zelle 1-Zelle m, Zelle 1-Zelle 6) kleiner als eine untere Schwellenspannung ist, und
Aufnahme der elektrischen Energie aus der Gleichstromversorgung durch die Batteriezelle (Zelle 1-Zelle m, Zelle 1-Zelle 6).

11. Verfahren zum Betreiben der Batteriezellenausgleichsschaltung nach Anspruch 10, wobei die Batteriezellenausgleichsschaltung ferner umfasst:
einen isolierten DC/DC-Wandler (400), wobei eine Eingangsseite des isolierten DC/DC-Wandlers (400) parallel mit einer Eingangsseite jedes der Schalter (S_{1A} -S_{mB} , S₁ -Sₘ₊₁ , RL1-RL6) gekoppelt ist, und eine Ausgangsseite des isolierten DC/DC-Wandlers (400) mit der Batterieverbindung (L_{CELL} ) gekoppelt ist,
wobei die elektrische Energie der Batteriezelle (Zelle 1-Zelle m, Zelle 1-Zelle 6) über den isolierten DC/DC-Wandler (400) an die Batterieverbindung (L_{CELL} ) abgegeben wird.

12. Verfahren zum Betreiben der Batteriezellenausgleichsschaltung nach Anspruch 10, wobei die Batteriezellenausgleichsschaltung ferner umfasst:
einen AC/DC-Wandler (300), der so konfiguriert ist, dass er eine AC-Leistung (V_{AC} ) empfängt und die AC-Leistung (V_{AC} ) in die DC-Leistung umwandelt,
wobei der Schaltkreisschalter (SC) über den AC/DC-Wandler (300) mit dem Wechselstrom (V_{AC} ) gekoppelt ist.

13. Verfahren zum Betreiben der Batteriezellenausgleichsschaltung nach Anspruch 10, wobei die Schalter (RL1-RL6) elektromagnetische Relais (RL1-RL6) sind,
ein erstes positives Ende jedes der Schalter (RL1-RL6), das mit einem positiven Ende der Gleichstromversorgung verbunden ist, und ein erstes negatives Ende jedes der Schalter (RL1-RL6), das mit einem negativen Ende der Gleichstromversorgung verbunden ist,
ein zweites positives Ende jedes der Schalter (RL1-RL6), das entsprechend mit einem positiven Ende der Batteriezelle (Zelle 1-Zelle m, Zelle 1-Zelle 6) verbunden ist, und ein zweites negatives Ende der Schalter (RL1-RL6), das entsprechend mit einem negativen Ende der Batteriezelle (Zelle 1-Zelle m, Zelle 1-Zelle 6) verbunden ist.

14. Verfahren zum Betreiben der Batteriezellenausgleichsschaltung nach Anspruch 10, wobei die Schalter (S_{1A} -S_{mB} ) eine Vielzahl von Schaltereinheiten (S_{1A} -S_{mB} ) umfassen,
wobei das positive Ende jeder der Batteriezellen (Zelle 1 - Zelle m, Zelle 1 - Zelle 6) jeweils mit einem ersten Ende einer Schalteinheit (S_{1A} - S_{mB} ) verbunden ist und die zweiten Enden der Schalteinheiten (S_{1A} - S_{mB} ) gemeinsam mit einem positiven Ende der Gleichstromversorgung verbunden sind,
wobei das negative Ende jeder der Batteriezellen (Zelle 1 - Zelle m, Zelle 1 - Zelle 6) jeweils mit einem ersten Ende einer Schalteinheit (S_{1A} - S_{mB} ) verbunden ist und die zweiten Enden der Schalteinheiten (S_{1A} - S_{mB} ) gemeinsam mit einem negativen Ende der Gleichstromversorgung verbunden sind.

15. Verfahren zum Betreiben der Batteriezellenausgleichsschaltung nach Anspruch 10, wobei die Schalter (S₁ -Sₘ₊₁ , Sa1-Sb2) eine Vielzahl von Schaltereinheiten (S₁ -Sₘ₊₁ ) und eine Schalteranordnung (Sa, Sa1-Sb2) umfassen,
ein positives Ende einer ersten Batteriezelle der Batteriezellen (Zelle 1-Zelle m, Zelle 1-Zelle 6), das mit einem ersten Ende einer Schaltereinheit (S₁ -Sₘ₊₁ ) verbunden ist, ein negatives Ende einer letzten Batteriezelle der Batteriezellen (Zelle 1-Zelle m, Zelle 1-Zelle m, Zelle 1-Zelle 6), die mit einem ersten Ende einer Schalteinheit (S₁ -Sₘ₊₁ ) verbunden ist, und das positive Ende und das negative Ende der mittleren Batteriezellen (Zelle 1-Zelle m, Zelle 1-Zelle 6) gemeinsam mit einem ersten Ende einer Schalteinheit (S₁ -Sₘ₊₁ ) verbunden,
die Schalterbaugruppe (Sa, Sa1-Sb2) eine Vielzahl von Schaltschalteinheiten (Sa, Sa1-Sb2) umfasst,
wobei zweite Enden der Schalteinheiten (S₁ -Sₘ₊₁ ) entsprechend mit den Schaltschalteinheiten (Sa, Sa1-Sb2) verbunden sind, so dass die positiven Enden der Batteriezellen (Zelle 1-Zelle m, Zelle 1-Zelle 6) entsprechend mit einem positiven Ende des Gleichstroms verbunden sind und die negativen Enden der Batteriezellen (Zelle 1-Zelle m, Zelle 1-Zelle 6) entsprechend mit einem negativen Ende des Gleichstroms verbunden sind.

## Revendications

1. Un circuit d'équilibrage de cellule de batterie, comprenant
une pluralité de cellules de batterie (cellule 1 à cellule m, cellule 1 à cellule 6),
une pluralité de commutateurs (S -S_{1AmB} , S -S₁ₘ₊₁ , RL1-RL6), chacun des commutateurs (S -S_{1AmB} , S -S₁ₘ₊₁ , RL1-RL6) étant connecté de manière correspondante à chacune des cellules de la batterie (Cellule 1-Cell m, Cellule 1-Cell 6), et
un convertisseur CA/CC (300), configuré pour recevoir une puissance CA (V_{AC} ) et convertir la puissance CA (V_{AC} ) en une puissance CC,
**caractérisé par le fait que** le circuit d'équilibrage des cellules de la batterie comprend en outre :
un convertisseur CC/CC isolé (400), un côté entrée du convertisseur CC/CC isolé (400) couplé en parallèle à un côté entrée de chacun des commutateurs (S -S_{1AmB} , S -S₁ₘ₊₁ , RL1-RL6), et un côté sortie du convertisseur CC/CC isolé (400) couplé à un lien de batterie (L_{CELL} ), dans lequel la pluralité d'éléments de batterie (Cellule 1-Cell m, Cellule 1-Cell 6) sont connectés en série pour former un lien de batterie (L_{CELL} ),
un commutateur de circuit (S_{C} ), couplé entre le convertisseur CA/CC (300), le convertisseur CC/CC isolé (400) et la pluralité de commutateurs (S -S_{1AmB} , S -S₁ₘ₊₁ , RL1-RL6), et
une unité de commande (500), configurée pour fournir une pluralité de signaux de commande (SRL1-SRL6, S1c-S7c, S_{CC} ) pour commander de manière correspondante la pluralité de commutateurs (S -S_{1AmB} , S -S₁ₘ₊₁ , RL1-RL6) et le commutateur de circuit (S_{C}).

2. Le circuit d'équilibrage de cellule de batterie selon la revendication 1, dans lequel lorsque l'unité de commande (500) détecte qu'une tension de batterie de l'un des éléments de batterie (élément 1-élément m, élément 1-élément 6) est supérieure à une tension de seuil supérieure, l'unité de commande (500) active le commutateur (S -S_{1AmB} , S -S₁ₘ₊₁ , RL1-RL6) correspondant à l'élément de batterie de sorte que l'énergie électrique de l'élément de batterie (Cellule 1-Cell m, Cellule 1-Cell 6) est libérée vers le lien de batterie (L_{CELL} ) par l'intermédiaire du convertisseur CC/CC isolé (400).

3. Le circuit d'équilibrage de cellule de batterie selon la revendication 1, dans lequel lorsque l'unité de commande (500) détecte qu'une tension de batterie de l'un des éléments de batterie (élément 1-élément m, élément 1-élément 6) est inférieure à une tension de seuil inférieure, l'unité de commande (500) active l'interrupteur du circuit (Sc) et active l'interrupteur (S -S_{1AmB}, S -S₁ₘ₊₁ , RL1-RL6) correspondant à l'élément de batterie (Cellule 1-Cell m, Cellule 1-Cell 6) de sorte que l'élément de batterie reçoive l'énergie électrique du courant alternatif (V_{AC} ).

4. Le circuit d'équilibrage de cellule de batterie selon la revendication 1, dans lequel les commutateurs (RL1-RL6) sont des relais électromagnétiques (RL1-RL6),
une première extrémité positive de chacun des commutateurs (RL1-RL6) connectée à une extrémité positive de l'alimentation en courant continu, et une première extrémité négative de chacun des commutateurs (RL1-RL6) connectée à une extrémité négative de l'alimentation en courant continu,
une deuxième extrémité positive de chacun des interrupteurs (RL1-RL6) connectée de manière correspondante à une extrémité positive de l'élément de batterie (Cellule 1-Cell m, Cellule 1-Cell 6), et une deuxième extrémité négative des interrupteurs (RL1-RL6) connectée de manière correspondante à une extrémité négative de l'élément de batterie (Cellule 1-Cell m, Cellule 1-Cell 6).

5. Circuit d'équilibrage d'éléments de batterie selon la revendication 1, dans lequel les commutateurs (S -S_{1AmB} ) comprennent une pluralité d'unités de commutation (S -S_{1AmB} ),
l'extrémité positive de chacune des cellules de la batterie (Cellule 1-Cellule m, Cellule 1-Cellule 6) respectivement connectée à une première extrémité d'une unité de commutation (S - S_{1AmB} ), et les deuxièmes extrémités des unités de commutation (S -S_{1AmB} ) conjointement connectées à une extrémité positive de l'alimentation en courant continu,
l'extrémité négative de chacune des cellules de la batterie (Cellule 1-Cellule m, Cellule 1-Cellule 6) respectivement connectée à une première extrémité d'une unité de commutation (S - S_{1AmB} ), et les deuxièmes extrémités des unités de commutation (S -S_{1AmB} ) conjointement connectées à une extrémité négative de l'alimentation en courant continu.

6. Le circuit d'équilibrage de cellule de batterie selon la revendication 1, dans lequel les commutateurs (S -S₁ₘ₊₁ , Sa, Sa1-Sb2) comprennent une pluralité d'unités de commutation (S - S₁ₘ₊₁ ) et un ensemble de commutateurs (Sa, Sa1-Sb2),
une extrémité positive d'une première cellule de batterie des cellules de batterie (Cellule 1-Cell m, Cellule 1-Cell 6) connectée à une première extrémité d'une unité de commutation (S -S₁ₘ₊₁ ), une extrémité négative d'une dernière cellule de batterie des cellules de batterie (Cellule 1-Cell m, Cellule 1-Cell 6) connectée à une première extrémité d'une unité de commutation (S -S₁ₘ₊₁ ), et l'extrémité positive et l'extrémité négative des cellules de batterie du milieu (Cellule 1-Cell m, Cellule 1-Cell 6) connectées conjointement à une première extrémité d'une unité de commutation (S -S₁ₘ₊₁ ),
l'ensemble de commutation (Sa, Sa1-Sb2) comprend plusieurs unités de commutation (Sa1-Sb2),
dans lequel les secondes extrémités des unités de commutation (S -S₁ₘ₊₁ ) sont connectées de manière correspondante aux unités de commutation (Sa1-Sb2) de sorte que les extrémités positives des éléments de batterie (Cellule 1-Cell m, Cellule 1-Cell 6) sont connectées de manière correspondante à une extrémité positive de l'alimentation en courant continu et que les extrémités négatives des éléments de batterie (Cellule 1-Cell m, Cellule 1-Cell 6) sont connectées de manière correspondante à une extrémité négative de l'alimentation en courant continu.

7. Le circuit d'équilibrage de cellule de batterie selon la revendication 1, dans lequel le convertisseur CA/CC (300) comprend un circuit de conversion CA/CC et un circuit de conversion CC/CC non isolé ; le circuit de conversion CC/CC non isolé est un circuit de conversion buck comprenant deux commutateurs (S1, S2) et une inductance (L1).

8. Le circuit d'équilibrage de cellule de batterie selon la revendication 1, dans lequel l'unité de commande (500) comprend une unité de commande de charge de batterie (500) et un contrôleur configuré pour commander les opérations de charge et de décharge des éléments de batterie (élément l'élément m, élément l'élément 6).

9. Le circuit d'équilibrage de cellule de batterie selon la revendication 1, comprenant en outre :
une pluralité de composants de protection contre les surintensités (F1-F7) connectés entre les interrupteurs et les cellules de la batterie (Cellule 1-Cellule m, Cellule 1-Cellule 6).

10. Une méthode de fonctionnement d'un circuit d'équilibrage de cellule de batterie, le circuit d'équilibrage de cellule de batterie comprenant une pluralité de cellules de batterie (Cellule 1-Cell m, Cellule 1-Cell 6) connectées en série pour former un lien de batterie (L_{CELL} ), une pluralité de commutateurs (S -S_{1AmB} , S -S₁ₘ₊₁ , RL1-RL6), chacun des interrupteurs (S - S_{1AmR} , S -S₁ₘ₊₁ , RL1-RL6) correspondant à chacun des éléments de la batterie (Cellule 1-Cell m, Cellule 1-Cell 6), et un interrupteur de circuit (S_{C} ) couplé entre une alimentation en courant continu et les interrupteurs (S -S_{1AmB} , S -S₁ₘ₊₁ , RL1-RL6), **caractérisé en ce que** le procédé comprend les étapes de :
commander l'interrupteur (S -S_{1AmB} , S -S₁ₘ₊₁ , RL1-RL6) correspondant à l'élément de batterie (Cellule 1-Cell m, Cellule 1-Cell 6) pour qu'il soit activé lorsqu'une tension de batterie de l'un quelconque des éléments de batterie (Cellule 1-Cell m, Cellule 1-Cell 6) est détectée comme étant supérieure à une tension de seuil supérieure,
la libération de l'énergie électrique de l'élément de batterie (élément 1-élément m, élément l'élément 6) vers le lien de batterie (L_{CELL} ),
commander la mise en marche de l'interrupteur du circuit (S_{C} ) et commander la mise en marche de l'interrupteur (S -S_{1AmB} , S -S₁ₘ₊₁ , RL1-RL6) correspondant à l'élément de batterie (Cellule 1-Cell m, Cellule 1-Cell 6) lorsque la tension de batterie de l'un quelconque des éléments de batterie (Cellule 1-Cell m, Cellule 1-Cell 6) est détectée comme étant inférieure à une tension de seuil inférieure, et
recevoir, par l'élément de batterie (cellule 1 à cellule m, cellule 1 à cellule 6), l'énergie électrique provenant de l'alimentation en courant continu.

11. La méthode de fonctionnement du circuit d'équilibrage de cellule de batterie selon la revendication 10, dans laquelle le circuit d'équilibrage de cellule de batterie comprend en outre :
un convertisseur DC/DC isolé (400), un côté entrée du convertisseur DC/DC isolé (400) couplé en parallèle à un côté entrée de chacun des commutateurs (S -S_{1AmB} , S -S₁ₘ₊₁ , RL1-RL6), et un côté sortie du convertisseur DC/DC isolé (400) couplé au lien de la batterie (L_{CELL} ),
L'énergie électrique de l'élément de batterie (élément 1-élément m, élément 1-élément 6) est transmise à la liaison de batterie (L_{CELL} ) par le convertisseur CC/CC isolé (400).

12. Méthode de fonctionnement du circuit d'équilibrage de la cellule de la batterie selon la revendication 10, dans laquelle le circuit d'équilibrage de cellule de batterie comprend en outre :
un convertisseur CA/CC (300), configuré pour recevoir une alimentation CA (V_{AC} ) et convertir l'alimentation CA (V_{AC} ) en alimentation CC,
dans lequel le commutateur de circuit (S_{C} ) est couplé à l'alimentation en courant alternatif (V_{AC} ) par l'intermédiaire du convertisseur CA/CC (300).

13. La méthode de fonctionnement du circuit d'équilibrage de cellule de batterie selon la revendication 10, dans laquelle les commutateurs (RL1-RL6) sont des relais électromagnétiques (RL1-RL6),
une première extrémité positive de chacun des commutateurs (RL1-RL6) connectée à une extrémité positive de l'alimentation en courant continu, et une première extrémité négative de chacun des commutateurs (RL1-RL6) connectée à une extrémité négative de l'alimentation en courant continu,
une deuxième extrémité positive de chacun des interrupteurs (RL1-RL6) connectée de manière correspondante à une extrémité positive de l'élément de batterie (Cellule 1-Cell m, Cellule 1-Cell 6), et une deuxième extrémité négative des interrupteurs (RL1-RL6) connectée de manière correspondante à une extrémité négative de l'élément de batterie (Cellule 1-Cell m, Cellule 1-Cell 6).

14. La méthode de fonctionnement du circuit d'équilibrage de cellule de batterie selon la revendication 10, dans laquelle les commutateurs (S -S_{1AmB} ) comprennent une pluralité d'unités de commutation (S -S_{1AmB} ),
l'extrémité positive de chacune des cellules de la batterie (Cellule 1-Cellule m, Cellule 1-Cellule 6) respectivement connectée à une première extrémité d'une unité de commutation (S - S_{1AmB} ), et les deuxièmes extrémités des unités de commutation (S -S_{1AmB} ) conjointement connectées à une extrémité positive de l'alimentation en courant continu,
l'extrémité négative de chacune des cellules de la batterie (Cellule 1-Cellule m, Cellule 1-Cellule 6) respectivement connectée à une première extrémité d'une unité de commutation (S - S_{1AmB} ), et les deuxièmes extrémités des unités de commutation (S -S_{1AmB} ) conjointement connectées à une extrémité négative de l'alimentation en courant continu.

15. La méthode de fonctionnement du circuit d'équilibrage de cellule de batterie selon la revendication 10, dans laquelle les commutateurs (S -S₁ₘ₊₁ , Sa1-Sb2) comprennent une pluralité d'unités de commutation (S -S₁ₘ₊₁ ) et un ensemble de commutateurs (Sa, Sa1-Sb2),
une extrémité positive d'une première cellule de batterie des cellules de batterie (Cellule 1-Cell m, Cellule 1-Cell 6) connectée à une première extrémité d'une unité de commutation (S -S₁ₘ₊₁ ), une extrémité négative d'une dernière cellule de batterie des cellules de batterie (Cellule 1-Cell m, Cellule 1-Cell 6) connectée à une première extrémité d'une unité de commutation (S -S₁ₘ₊₁ ), et l'extrémité positive et l'extrémité négative des cellules de batterie du milieu (Cellule 1-Cell m, Cellule 1-Cell 6) connectées conjointement à une première extrémité d'une unité de commutation (S -S₁ₘ₊₁ ),
l'ensemble de commutation (Sa, Sa1-Sb2) comprend plusieurs unités de commutation (Sa, Sa1-Sb2),
dans lequel les secondes extrémités des unités de commutation (S -S₁ₘ₊₁ ) sont connectées de manière correspondante aux unités de commutation (Sa, Sa1-Sb2) de sorte que les extrémités positives des éléments de batterie (Cellule 1-Cell m, Cellule 1-Cell 6) sont connectées de manière correspondante à une extrémité positive de l'alimentation en courant continu et que les extrémités négatives des éléments de batterie (Cellule 1-Cell m, Cellule 1-Cell 6) sont connectées de manière correspondante à une extrémité négative de l'alimentation en courant continu.
